**Europäisches Patentamt**

**European Patent Office**

**Office européen des brevets**

(19)

(11) Veröffentlichungsnummer: **0 602 277 A1**

(12) # EUROPÄISCHE PATENTANMELDUNG

(21) Anmeldenummer: **92121627.1**

(22) Anmeldetag: **18.12.92**

(51) Int. Cl.⁵ **G01P 15/16**

(43) Veröffentlichungstag der Anmeldung:
**22.06.94 Patentblatt 94/25**

(84) Benannte Vertragsstaaten:
**DE FR GB IT**

(71) Anmelder: **SIEMENS AKTIENGESELLSCHAFT**
**Wittelsbacherplatz 2**
**D-80333 München(DE)**

(72) Erfinder: **Angermaier, Anton, Dipl.-Ing. (FH)**
**Renatastrasse 17**
**W-8300 Landshut(DE)**
Erfinder: **Wier, Manfred, Dr. Ing.**
**Ahornweg 2**
**W-8411 Wenzenbach(DE)**
Erfinder: **Engl, Maximilian, Dipl.-Ing. (FH)**
**Prinz-Rupprechtstrasse 10**
**W-8400 Regensburg(DE)**

(54) **Verfahren zum Erkennen von Schlechtwegstrecken.**

(57) Die Erfindung betrifft ein Verfahren zur Erkennung von Schlechtwegstrecken mittels einer Auswertung der Radbewegungen eines Fahrzeuges, insbesondere der dort auftretenden Beschleunigungen. Eine unebene Wegstrecke erzeugt Beschleunigungen, die wesentlich größer sind als die Beschleunigungen, die die Brennkraftmaschine physikalisch ermöglicht. Überschreiten die Beschleunigungen vorgebbare Grenzwerte, kann daher auf eine Schlechtwegstrecke geschlossen werden.

FIG 1

EP 0 602 277 A1

Die Erfindung betrifft ein Verfahren zur Erkennung von Schlechtwegstrecken durch eine Auswertung der Raddrehzahlen eines Fahrzeuges.

Die Erkennung von Schlechtwegstrecken ist notwendig bei Verfahren zur Erkennung von Verbrennungsaussetzern, die die Vibrationen des Verbrennungsmotors überwachen oder die die Laufunruhe der Brennkraftmaschine anhand der schwankenden Umdrehungsgeschwindigkeit der Kurbelwelle überprüfen. Diese dort beobachteten Vibrationen oder Schwankungen der Umdrehungsgeschwindigkeit rühren erwünschterweise her vom zu überwachenden Verbrennungsvorgang und unerwünschterweise von äußeren Einflüssen auf das Fahrzeug, wie sie z.B. beim Überfahren einer unebenen Wegstrecke durch die dadurch verursachten Erschütterungen des Fahrzeugs und durch Schwingungsanregungen der Kurbelwelle auftreten.

Aufgabe der vorliegenden Erfindung ist es, ein Verfahren anzugeben, das es ermöglicht, mit ausreichender Sicherheit eine solche schlechte Wegstrecke zu erkennen und das sich ohne zu großen zusätzlichen Hardware- und Softwareaufwand verwirklichen läßt.

Gelöst wird diese Aufgabe durch eine Überwachung der Raddrehzahl eines oder mehrerer Räder eines Fahrzeuges. Es werden dabei die Schwankungen der Raddrehzahl ausgewertet.

Informationen über die Raddrehzahl sind häufig bei Fahrzeugen mit elektronischer Motorsteuerung, insbesondere beim Vorhandensein einer ABS-Anlage, sowieso verfügbar, so daß hier kein zusätzlicher Hardwareaufwand zur Erfassung der Raddrehzahl notwendig ist.

Beim erfindungsgemäßen Verfahren werden nun die Schwankungen der Raddrehzahl ausgewertet, das heißt die positiven und negativen Beschleunigungen des Rades.
Es liegt dem die Beobachtung zugrunde, daß die durch die Bodenunebenheiten verursachten Beschleunigungen des Rades um ein Vielfaches größer sind als die Beschleunigungen, die durch den normalen Motorbetrieb physikalisch möglich sind. Werden also solch große Beschleunigungen am Rad gemessen, kann auf das Vorliegen einer Schlechtwegstrecke geschlossen werden.

Zur Erfassung der Raddrehzahl ist gebräuchlicherweise am betreffenden Rad ein mit Zähnen versehenes Geberrad angebracht, das von einem passenden Sensor abgetastet wird.

Es werden nun die Zeiten (Segmentzeiten) gemessen, die das Rad benötigt, um einen bestimmten Winkelbereich zu überstreichen, d.h. die Zeiten, in der jeweils eine vorgebbare Anzahl von Zähnen des Geberrades den abtastenden Sensor passiert hat.

Um die Beschleunigungen des Rades, beziehungsweise die Änderungen der Segmentzeiten zu erfassen, werden jeweils aufeinanderfolgende Segmentzeiten miteinander verglichen. Überschreitet die Differenz einen vorgebbaren Grenzwert, so wird auf eine Schlechtwegstrecke geschlossen.

Da einzelne Unebenheiten des Untergrundes sich nur gering auf die Kurbelwellenschwingungen auswirken, d.h. die oben angeführten Verfahren zur Verbrennungsaussetzererkennung nicht nennenswert gestört werden, sollen Einzelstörungen unterdrückt werden und nur Schlechtwegstrecken erkannt werden, die eine gewisse Ausdehnung haben.

Die Beträge der ermittelten Differenzen der Segmentzeiten werden daher vor dem Vergleich mit dem Grenzwert vorteilhafterweise einer Mittelung unterzogen, beispielsweise einer gleitenden Mittelung.

Da die Auswirkungen der Schlechtwegstrecke auf das Fahrzeug stark geschwindigkeitsabhängig sind, ist es vorteilhaft, oben beschriebenen Grenzwert nicht konstant zu lassen, sondern geschwindigkeitsabhängig einem Kennfeld zu entnehmen. Auch ist es möglich, die betrachtete Segmentgröße geschwindigkeitsabhängig zu verändern, d.h. bei höheren Geschwindigkeiten auch die Segmentgröße zu erhöhen. Dies vermindert außerdem die Belastung des auswertenden Rechners.

Für die genaue Ermittlung einer Schlechtwegstrecke ist es notwendig, zumindest ein linkes und ein rechtes Rad auszuwerten, um eine Schlechtwegstrecke auch dann zu erkennen, wenn sich z.B. die linken Räder noch auf der ebenen Fahrbahn befinden, das Fahrzeug sich aber mit den rechten Rädern schon auf dem unebenen Randstreifen befindet.
Durch diese doppelte Auswertung wird wieder eine hohe Rechnerbelastung verursacht. Um diese zu senken, ist es möglich, nur ein Rad auszuwerten oder in einem Zeitraster zwischen der Auswertung eines linken Rades und eines rechten Rades hin- und herzuschalten.

Es besteht außerdem die Möglichkeit ein angetriebenes oder ein nicht angetriebens Rad zur Auswertung heranzuziehen.

Das Verfahren wird im folgenden anhand der Zeichnungsfiguren noch näher beschrieben. Es zeigen:

> Figur 1     eine schematische Darstellung des erfindungsgemäßen Verfahrens
>
> Figur 2     ein Beispiel des Verlaufs der gemessenen Segmentzeiten und einer daraus berechneten, die Beschleunigung repräsentierenden Größe für den Fall, daß das Fahrzeug von einer glatten Fahrbahn auf eine Schlechtwegstrecke einfährt

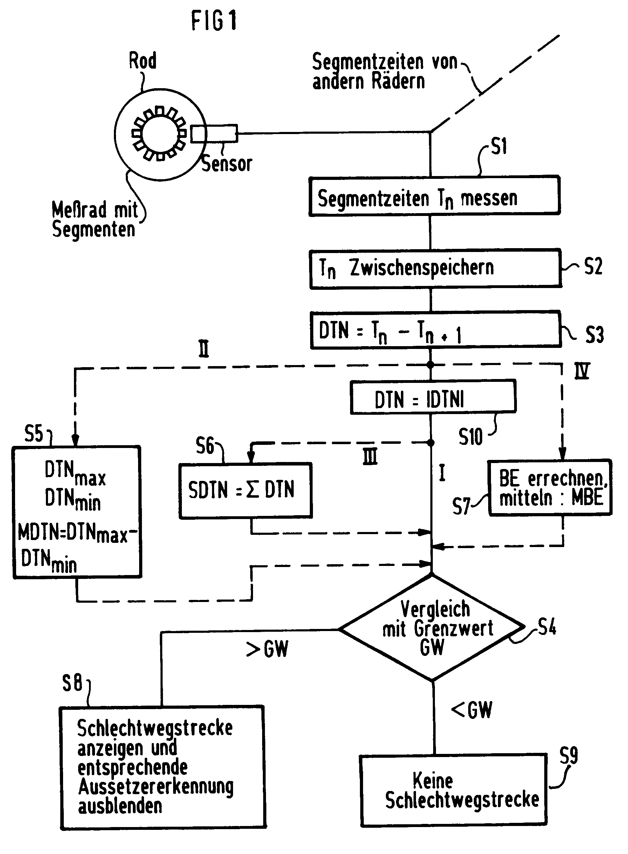

In Figur 1 ist schematisch in durchgezogenen Linien eine Ausführungsform des erfindungsgemäßen Verfahrens dargestellt (Variante I). Die 3 zusätzlichen Verfahrensvarianten (Varianten II,III und IV) bei der Weiterverarbeitung der berechneten Differenzen der Segmentzeiten, sind in gestrichelten Linien dargestellt.

Zunächst werden im Verfahrensschritt S1 die Segmentzeiten $T_n$ gemessen, also die Dauer derjenigen Zeiten, die das beobachtete Rad braucht, um bestimmte Winkelbereiche zu überstreichen. Beispielhaft ist die Messung angedeutet durch ein Geberrad mit Segmenten und ein diese Segmente abtastenden Sensor.

Im Verfahrensschritt S2 werden die gemessenen Segmentzeiten $T_n$ zwischengespeichert.

Aus aufeinanderfolgenden Segmentzeiten $T_n$, $T_{n+1}$ werden im Verfahrensschritt S3 jeweils die Differenzen DTN berechnet.

Beim in durchgezogenen Linien dargestellten Verfahrensablauf (Verfahrensvariante I) wird im Verfahrensschritt S10 der Betrag der Differenz gebildet und dieser im Verfahrensschritt S4 direkt mit einem Grenzwert GW verglichen.

In der Verfahrensvariante II wird dagegen im Verfahrensschritt S5 aus den während eines vorgebbaren Zeitraums ermittelten Differenzen der Maximalwert ($DTN_{max}$) und der Minimalwert ($DTN_{min}$) und aus diesen beiden Werten der Betrag MDTN $= |DTN_{max} - DTN_{min}|$. Dieser Wert MDTN wird dann im Verfahrensschritt S4 wieder mit einem Grenzwert GW verglichen.

In der Verfahrensvariante III werden, nachdem im Verfahrensschritt S10 die Beträge der ermittelten Differenzen gebildet wurden, diese im Verfahrensschritt S6 über eine vorgebbare Zahl von Segmenten aufsummiert. Diese Summe SDTN wird dann wieder im Verfahrensschritt S4 mit einem Grenzwert GW verglichen.

In der Verfahrensvariante IV wird aus den Segmentzeiten im Verfahrensschritt S7 eine die Beschleunigung repräsentierende Auslösegröße BE ermittelt nach der Formel:

$$BE = \left| \frac{T_n - T_{n-1}}{0,5 * (T_n + T_{n+1})} \right|,$$

wobei

$T_n$     die Zeit ist, die das Rad zum Überstreichen des Winkelsegments n benötigt,

$T_{n+1}$     die Zeit ist, die das Rad zum Überstreichen des gleich großen Winkelsegments n + 1 benötigt.

Diese Auslösegrößen werden direkt (BE), oder nachdem sie zusätzlich einer gleitenden Mittelung (MBE) beispielsweise nach der Formel:

$$MBE_n = MBE_{n-1} + MITKO * (BE_n - MBE_{n-1})$$

unterzogen wurden, im Verfahrensschritt S4 wieder mit einem Grenzwert GW verglichen.

Ist der nach einem der vier Verfahren ermittelte Wert betragsmäßig größer als der Grenzwert GW, so wird im Verfahrensschritt S8 eine Schlechtwegstrecke erkannt und die entsprechenden Verfahren zur Erkennung von Verbrennungsaussetzern ausgeblendet.

Ist aber der ermittelte Wert kleiner als der Grenzwert GW, so wird keine Schlechtwegstrecke erkannt - steuernde Maßnahmen unterbleiben (Verfahrensschritt S9).

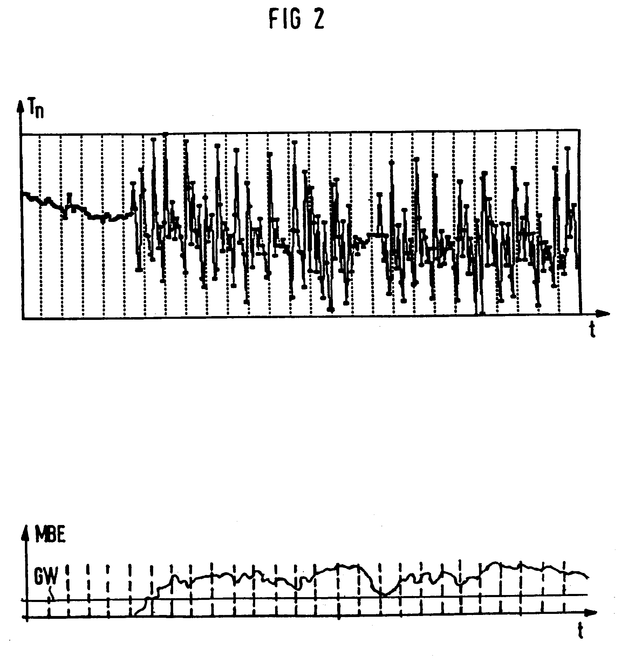

In Figur 2 sind in der oberen Hälfte, die am Rad zeitlich nacheinander gemessenen Segmentzeiten $T_n$ über der Zeit t aufgetragen. Das Fahrzeug befindet sich anfangs (linker Zeitbereich) auf einer glatten Fahrbahn. Die Schwankungen der Segmentzeiten $T_n$ sind relativ gering. Dann fährt das Fahrzeug auf eine schlechte Wegstrecke ein (rechter Zeitbereich). Die Segmentzeiten $T_n$ beginnen in ihrer Dauer stark zu schwanken.

In der unteren Hälfte der Figur 2 ist nun beispielhaft die, aus den gemessenen Segmentzeiten $T_n$ berechnete, die Beschleunigung des Rades repräsentierende Auslösegröße (BE) aufgetragen. Sie berechnet sich, wie oben schon beschrieben, nach der Formel:

$$BE = \left| \frac{T_n - T_{n-1}}{0,5 * (T_n + T_{n+1})} \right|$$

Sie wird anschließend einer gleitenden Mittelung unterzogen (MBE).
Im linken Bereich, d.h. solange sich das Fahrzeug auf einer glatten Fahrbahn befindet, ist diese Größe MBE nahezu Null.

Sobald das Fahrzeug aber auf die schlechte Wegstrecke einfährt (rechter Zeitbereich), steigt diese Größe MBE mit Schwankungen spürbar an. Diese Schwankungen überschreiten betragsmäßig dann einen hier als waagerechte Linie eingezeichneten Grenzwert GW, so daß zuverlässig diese schlechte Wegstrecke erkannt wird.

**Patentansprüche**

1.   Verfahren zur Erkennung von Schlechtwegstrecken **dadurch gekennzeichnet,** daß eine, die Beschleunigung mindestens eines Rades eines Fahrzeuges repräsentierende Auslösegröße (BE) ermittelt wird, und eine Schlechtwegstrecke erkannt wird, wenn der Betrag dieser Auslösegröße einen vorgebbaren Grenzwert (GW) überschreitet, wobei die Auslösegröße abhängig ist von mindestens zwei Segmentzeiten ($T_n$), die ein Rad zum Durchlaufen zugeordneter Winkelsegmente benötigt.

2. Verfahren nach Anspruch 1,
**dadurch gekennzeichnet,** daß als Auslösegröße der Betrag der Differenz (DTN) von aufeinanderfolgenden Segmentzeiten dient.

3. Verfahren nach Anspruch 1,
**dadurch gekennzeichnet,** daß die Auslösegröße ermittelt wird, indem die Beträge der Differenzen (DTN) aufeinanderfolgender Segmentzeiten gebildet über eine vorgebbare Anzahl von Segmenten aufsummiert werden (SDTN).

4. Verfahren nach Anspruch 1,
**dadurch gekennzeichnet,** daß die Auslösegröße ermittelt wird,
- indem die Differenzen (DTN) von aufeinanderfolgenden Segmentzeiten gebildet werden,
- aus den während eines vorgebbaren Zeitraums ermittelten Differenzen der Maximalwert ($DTN_{max}$) und der Minimalwert ($DTN_{min}$) ermittelt wird und
- aus diesen beiden Werten die Differenz (MDTN) gebildet wird.

5. Verfahren nach Anspruch 1,
**dadurch gekennzeichnet,** daß die Auslösegröße (BE) ermittelt wird nach der Formel:

$$BE = \left| \frac{T_n - T_{n+1}}{0,5 * (T_n + T_{n+1})} \right|,$$

wobei

$T_n$     die Segmentzeit ist, die das Rad zum Überstreichen des Winkelsegments n benötigt,

$T_{n+1}$     die Segmentzeit ist, die das Rad zum Überstreichen des gleich großen Winkelsegments n+1 benötigt.

6. Verfahren nach Anspruch 5,
**dadurch gekennzeichnet,** daß die Auslösegröße (BE) vor dem Vergleich mit dem Grenzwert (GW) einer gleitenden Mittelung unterzogen wird nach der Formel:

$MBE_n = MBE_{n-1} + MITKO^*(BE_n - MBE_{n-1})$

7. Verfahren nach einem der Ansprüche 1 - 6
**dadurch gekennzeichnet,** daß die Segmentzeiten abwechselnd an einem Rad der linken Fahrzeugseite und an einem Rad der rechten Fahrzeugseite gemessen werden.

8. Verfahren nach einem der Ansprüche 1 - 6,
**dadurch gekennzeichnet,** daß es sich bei dem ausgewerteten Rad um ein angetriebenes Rad handelt.

9. Verfahren nach einem der Ansprüche 1 - 6,
**dadurch gekennzeichnet,** daß der Grenzwert (GW) und/ oder die Größe der Winkelsegmente geschwindigkeitsabhängig ist.

## FIG 1

Rod

Sensor

Meßrad mit Segmenten

Segmentzeiten von andern Rädern

Segmentzeiten $T_n$ messen — S1

$T_n$ Zwischenspeichern — S2

$DTN = T_n - T_{n+1}$ — S3

II

IV

$DTN = IDTNI$

S10

S5

$DTN_{max}$
$DTN_{min}$

$MDTN = DTN_{max} - DTN_{min}$

S6

III

$SDTN = \Sigma\, DTN$

I

BE errechnen, mitteln : MBE

S7

Vergleich mit Grenzwert GW — S4

> GW

< GW

S8

Schlechtwegstrecke anzeigen und entsprechende Aussetzererkennung ausblenden

S9

Keine Schlechtwegstrecke

## FIG 2

Europäisches
Patentamt

**EUROPÄISCHER RECHERCHENBERICHT**

Nummer der Anmeldung

EP 92 12 1627

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 497 354 (SNCF)<br>* Seite 1, Zeile 1 - Zeile 11; Abbildung 1 * | 1 | G01P15/16 |
| A | GB-A-2 238 391 (TAKATA CORP.)<br>* Seite 2, Zeile 6 - Zeile 17; Abbildungen 1-3 * | 1 | |
| A | US-A-5 056 360 (DOSDALL ET ALL)<br>* Spalte 3, Zeile 1 - Zeile 44; Abbildungen 1,4 * | 1 | |
| A | US-A-4 093 939 (N.H.MITCHELL)<br>* Spalte 1, Zeile 7 - Spalte 2, Zeile 26; Abbildung 1 * | 2 | |
| | ----- | | **RECHERCHIERTE SACHGEBIETE (Int. Cl.5)**<br><br>G01P |

Der vorliegende Recherchenbericht wurde für alle Patentansprüche erstellt

| Recherchenort | Abschlußdatum der Recherche | Prüfer |
|---|---|---|
| DEN HAAG | 25 AUGUST 1993 | HANSEN P. |